# FASCICULE DE BREVET EUROPEEN

(11) **EP 0 296 035 B1**
(45) Date de publication et mention de la délivrance du brevet: **05.01.1994**
(21) Numéro de dépôt: 88401419.2
(22) Date de dépôt: 10.06.1988
(51) Int. Cl.: G05D 16/20

(54) **Convertisseur électro-pneumatique à protection anti-déflagrante**
Elektropneumatischer Umformer mit explosionssicherem Schutz
Electropneumatic inverter with explosion-proof protection

(30) Priorité: 15.06.1987 FR 8708264
(43) Date de publication de la demande: 21.12.1988
(73) Titulaire: ELSAG INTERNATIONAL B.V., NL-Amsterdam (NL)
(72) Inventeur: Pirus, Pascal, F-63190 Lezoux (FR); Brion, Claude, F-63300 Thiers (FR); Briaire, Michel, F-63120 Courpiere (FR)
(74) Mandataire: Kremer, Robert A.M.

(56) Documents cités:
- DE-A- 3 601 907
- FR-A- 2 212 923
- GB-A- 744 261
- US-A- 3 614 352
- US-A- 4 512 357

## Description

La présente invention concerne un convertisseur électro-pneumatique muni d'une protection anti-déflagrante.

De façon plus précise l'invention concerne un transducteur pour convertir un signal constitué par l'intensité d'un courant électrique en une pression pneumatique représentative de l'intensité du courant, le transducteur présentant une protection anti-déflagrante pour pouvoir fonctionner dans une atmosphère dite explosive. Ces convertisseurs sont notamment utilisés pour la commande directe ou indirecte de vannes de contrôle de processus industriels. Par commande indirecte on entend en particulier l'action du convertisseur électro-pneumatique en passant par un dispositif d'asservissement en position, appelé positionneur, destiné à assurer une relation entre l'état du système de réglage pneumatique de position de l'obturateur de la vanne et le signal électrique de commande.

Le principe de ces convertisseurs électro-pneumatiques est bien connu. Le réglage de la pression est réalisé par un ensemble buse-palette, la valeur de la pression étant déterminée par la distance entre la buse et la palette. La palette est montée à une première extrémité d'un fléau de balance dont l'autre extrémité est soumise à l'action du signal de commande, par exemple à l'aide d'un électro-aimant. Un convertiseur à ensemble buse-palette et fléau soumis à l'action d'un électroaimant est par example décrit dans DE-A-3 601 907.

De tels systèmes sont parfaitement efficaces mais ils ne sont pas utilisables dans une atmosphère dite "explosive" du fait, en particulier, de la présence de la bobine de l'électro-aimant et de son circuit d'alimentation.

Le document GB 744 261 décrit d'une façon générale la protection des interrupteurs électriques contre le danger d'explosion mais ne concerne pas les convertisseurs électro-pneumatiques.

Un objet de la présente invention est de fournir un convertisseur électro-pneumatique du type rappelé ci-dessus qui présente des caractéristiques telles qu'il satisfasse aux normes en vigueur pour les appareils fonctionnant en atmosphère "explosive".

Telle que revendiquée, l'invention propose un convertisseur électro-pneumatique comprenant une buse solidaire d'un circuit de fluide à contrôler, un levier monté oscillant autour d'un axe et dont une extrémité est disposée en regard de la buse, un électro-aimant commandé par une bobine d'induction et comportant un noyau muni de deux branches définissant un entrefer pour la création d'un champ magnétique agissant sur le levier pour faire déplacer son extrémité en regard de la buse, la pression dudit fluide dépendant de la position de l'extrémité du levier par rapport à la buse; selon l'invention le convertisseur comprend une enceinte anti-déflagrante dont la paroi comporte des ouvertures traversées par lesdites branches et des moyens d'étanchéité anti-déflagrants au niveau de ces traversées; la bobine d'induction est située à l'intérieur de l'enceinte tandis que l'entrefer est situé à l'extérieur de l'enceinte, et le levier et son axe de rotation sont entièrement situés à l'extérieur de l'enceinte, l'extrémité du levier opposée à celle en regard de la buse étant disposée au voisinage de l'entrefer et soumise à l'action du champ magnétique.

Selon un mode préféré de mise en oeuvre le convertisseur comprend une palette apte à se déplacer en regard de ladite buse, ladite palette étant montée à l'extrémité du levier disposée en regard de la buse, l'autre extrémité de ce levier étant solidaire d'une pièce ferro-magnétique soumise à l'action du champ magnétique. De préférence encore ladite enceinte est formée de deux partie reliées entre elles de façon étanche, au moins une des deux parties étant réalisée en un matériau moulable et non magnétique, ladite partie étant réalisée par surmoulage partiel dudit noyau dans la zone formant les traversées.

On comprend qu'ainsi la partie électrique de l'électro-aimant est entièrement logée dans l'enceinte de confinement ce qui assure les propriétés anti-déflagrantes requises. La paroi de l'enceinte de confinement n'est traversée que par le noyau de l'électro-aimant, qui est une pièce fixe ; la réalisation des traversées en est ainsi beaucoup simplifiée. Enfin tout le système pneumatique est situé à l'extérieur de l'enceinte de confinement. La sortie du fluide hors de la buse se fait donc sans problème.

D'autres caractéristiques et avantages et l'invention apparaitront plus clairement à la lecture de la description qui suit de plusieurs modes de réalisation de l'invention donnés à titre d'exemples non limitatifs. La description se réfère aux dessins annexés sur lesquels :
La figure 1 est une vue simplifiée d'un premier mode de réalisation du convertisseur selon l'invention ; et
La figure 2 montre un deuxième mode de réalisation du convertisseur.

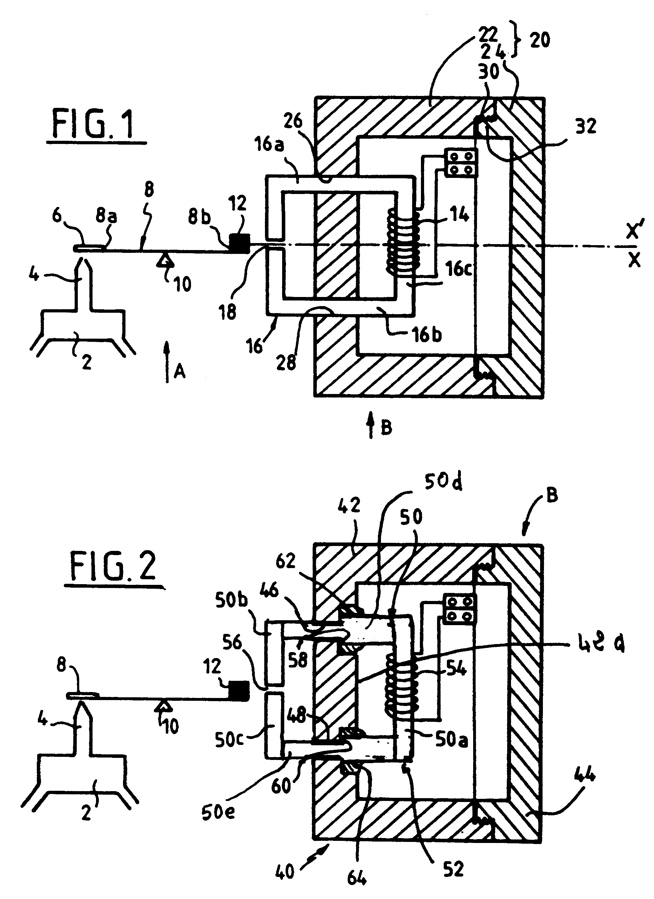

Comme le montre la figure 1 le convertisseur électro-pneumatique de l'invention comprend une partie pneumatique A et une partie électrique B.

La partie pneumatique A se compose d'un circuit pneumatique 2 dont on veut régler la pression en fonction d'un signal de commande électrique I. Le circuit pneumatique 2 est muni d'une buse calibrée 4 de réglage de pression. La buse 4 coopère avec une palette mobile 6 montée à une première extrémité 8a d'un bras 8 lui-même monté sur un fléau de balance 10. A la deuxième extrémité 8b du bras 8 est fixé un aimant permanent 12.

La partie électrique B se compose d'un électro-aimant de commande formée par une bobine d'excitation 14 et un circuit magnétique 16 ou noyau présentant un entrefer 18. Lorsque l'on fait circuler dans la bobine 14 un courant d'intensité I, le champ magnétique créé au voisinage de l'entrefer 18 exerce une attraction sur l'aimant permanent 12 provoquant un déplacement de celui-ci. La palette 6 subie donc un déplacement correspondant qui permet, en coopération avec la buse 4, de régler la pression dans le circuit pneumatique 2. L'entrefer 18 a une épaisseur de l'ordre de 1,2 mm et la bobine comporte environ 2600 spires. Dans les conditions normales d'utilisation les champs magnétiques créés au niveau de l'entrefer sont de l'ordre de 700 à 800 Gauss.

Comme le montre la figure 1, la bobine 14 et une partie du circuit magnétique 16 sont enfermées dans une enceinte anti-déflagrante 20. L'enceinte 20 est formée, de préférence, d'un corps 22 et d'un couvercle 24. Le circuit magnétique 16 traverse le fond 22a du corps 22 par deux traversées 26 et 28. Par exemple le corps 22 et le couvercle 24 présentent une forme générale cylindrique autour de l'axe XX′. La liaison entre le couvercle 22 et le corps 24 est réalisée par la coopération d'un filetage 30 et d'un taraudage 32 réalisés respectivement dans les pièces 22 et 24.

Les traversées 26 et 28 et la liaison 30, 32 sont réalisées de telle manière que l'enceinte 20 présente les propriétés anti-déflagrantes requises.

En ce qui concerne les traversées 26 et 28 cela peut être obtenu en réalisant le corps 22 de l'enceinte par surmoulage partiel du circuit magnétique 16. Les portions surmoulées 16a et 16b du circuit magnétique sont disposées entre l'entrefer 18 du circuit magnétique et la portion 16c du circuit magnétique sur laquelle est montée la bobine 14. L'enceinte est réalisée en aluminium. On obtient ainsi une étanchéité très poussée au niveau des traversées ce qui assure également les caractéristiques d'anti-déflagrance.En ce qui concerne la liaison entre le corps 22 de l'enceinte et le couvercle 24 de celle-ci, le chemin entre ces deux pièces a une longueur suffisante s'etendant de l'intérieur de l'enceinte à l'extérieur de celle-ci pour assurer les caractéristiques anti-déflagrantes. Typiquement cette longueur est de l'ordre de 10 mm.

La figure 2 montre un deuxième mode de réalisation du convertisseur électro-pneumatique selon l'invention. La partie pneumatique A est identique à celle de la figure 1. Elle ne sera donc pas décrite à nouveau. La partie électrique B diffère de celle de la figure 1 par le mode de réalisation des traversées dans la paroi de l'enceinte.

L'enceinte 40 est constituée par un corps 42 et un couvercle 44. Le corps 42 est percé de deux orifices 46 et 48 pour le passage du noyau 50 de l'électro-aimant 52. Le noyau est constitué par un élément central 50a sur lequel est montée une bobine 54, par deux éléments de traversée 50d et 50e et par deux éléments d'extrémité 50b et 50c dont les extrémités libres définissent l'entrefer 56. Les éléments de traversée 50d et 50e du noyau traversent librement les orifices 46 et 48 mais ils sont en butée contre la face interne 42a du corps 42 par des épaulements 58 et 60. Les éléments 50d et 50e du noyau sont rendus solidaires du corps 42 par des dépôts de résine adhésive 62 et 64 qui de plus obturent les jeux entre les orifices 46 et 48 et les éléments du noyau 50d et 50e. On obtient ainsi les propriétés anti-déflagrantes requises au niveau des orifices 46 et 48.

Le fonctionnement de ce mode de réalisation est identique à celui de réalisation de la figure 1.

En outre la bobine 14 ou 54 peut être reliée à l'extérieur de l'enceinte par un bornier et un cable électrique qui traverse la paroi de l'enceinte 20 ou 40 dans des conditions anti-déflagrantes.

On comprend que l'invention permet effectivement de résoudre le problème posé. D'une part le circuit électrique susceptible d'engendrer une explosion est entièrement logé dans l'enceinte 20 qui présente les caractéristiques anti-déflagrantes requises. D'autre part le circuit pneumatique est intégralement disposé à l'extérieur de l'enceinte 20. On évite ainsi les problémes déjà connus qu'auraient posés l'échappement du fluide pneumatique si les circuits pneumatiques avaient été logés dans l'enceinte.

## Revendications

1. Convertisseur électro-pneumatique comprenant une buse (4) solidaire d'un circuit (2) de fluide à contrôler, un levier (8) monté oscillant autour d'un axe et dont une extrémité est disposée en regard de la buse, un électro-aimant commandé par une bobine d'induction (14, 54) et comportant un noyau (16, 50) muni de deux branches (16a, 16b, 50d, 50e, 50b, 50c) définissant un entrefer (18, 56) pour la création d'un champ magnétique agissant sur le levier pour faire déplacer son extrémité en regard de la buse, la pression dudit fluide dépendant de la position de l'extrémité du levier par rapport à la buse, caractérisé par le fait qu'il comprend une enceinte anti-déflagrante (20, 40) dont la paroi comporte des ouvertures (26, 28; 46, 48) traversées, par lesdites branches et des moyens d'étanchéité anti-déflagrants (26, 28, 58, 60, 62, 64) au niveau de ces traversées,
par le fait que la bobine d'induction (14; 54) est située à l'intérieur de l'enceinte tandis que l'entrefer (18; 56) est situé à l'extérieur de l'enceinte (20; 40),
et par le fait que le levier (8) et son axe de rotation (10) sont entièrement situés à l'extérieur de l'enceinte, l'extrémité du levier opposée à celle en regard de la buse étant disposée au voisinage de l'entrefer (18, 56) et soumise à l'action du champ magnétique.

2. Convertisseur selon la revendication 1, caractérisé par le fait qu'il comprend une palette (6) montée a l'extrémité du levier (8) disposée en regard de la buse (4), tandis que l'extrémité de ce levier, opposée à celle en regard de la buse, est solidaire d'une pièce ferro-magnétique (12) soumise à l'action du champ magnétique.

3. Convertisseur selon la revendication 1 ou 2, caractérisé par le fait que la paroi de ladite enceinte (20) est formée de deux parties (22, 24) reliées entre elles de façon étanche par la coopération (30, 32) de leurs formes d'extrémité respectives conjuguées réalisant une interface cheminant depuis l'intérieur de l'enceinte jusqu'à l'extérieur sur une longueur choisie, et par le fait qu'au moins une des deux parties (22) est réalisée en un matériau moulable et non magnétique, ladite partie étant réalisée par surmoulage partiel dudit noyau (16) dans la zone formant les traversées (26, 28).

4. Convertisseur selon la revendication 1 ou 2, caractérisé par le fait que la paroi de ladite enceinte (40) est formée de deux parties (43, 44) reliées entre elles de façon étanche par la coopération de leurs formes d'extrémité respectives conjuguées réalisant une interface cheminant depuis l'intérieur de l'enceinte jusqu'à l'extérieur sur une longueur choisie, et par le fait que les branches (50d, 50e) du noyau s'étendant au travers desdites ouvertures (46, 48) comportent des épaulements (58, 60) venant en butée contre la face interne de la paroi (42) de l'enceinte, et sont solidarisées à cette paroi par une résine adhésive (62, 64), l'entrefer du noyau étant formé par deux éléments d'extrémité (50b, 50c) fixés sur l'extrémité des branches traversantes (50d, 50e) du noyau.

## Claims

1. Electropneumatic converter comprising a nozzle (4) rigidly attached to a circuit (2) of a fluid to be controlled, a lever (8) mounted so as to pivot about a fulcrum and one end of which is placed facing the nozzle, an electromagnet controlled by an induction coil (14, 54) and including a core (16, 50) equipped with two branches (16a, 16b, 50d, 50e, 50b, 50c) defining an air gap (18, 56) for creating a magnetic field which acts on the lever in order to move its end facing the nozzle, the pressure of the said fluid depending on the position of the end of the lever in relation to the nozzle, characterized in that it comprises an explosion-proof enclosure (20, 40), the wall of which includes openings (26, 28; 46, 48) penetrated by the said branches and explosion-proof sealing means (26, 28, 58, 60, 62, 64) at these penetrations, in that the induction coil (14; 54) is located inside the enclosure whereas the air gap (18; 56) is located outside the enclosure (20; 40) and in that the lever (8) and its rotation fulcrum (10) are entirely located outside the enclosure, the end of the lever opposite that facing the nozzle being placed in the vicinity of the air gap (18, 56) and subjected to the action of the magnetic field.

2. Converter according to Claim 1, characterized in that it comprises a flapper (6) mounted at the end of the lever (8) placed facing the nozzle (4), while the end of this lever, opposite that facing the nozzle, is rigidly attached to a ferromagnetic component (12) subjected to the action of the magnetic field.

3. Converter according to Claim 1 or 2, characterized in that the wall of the said enclosure (20) is formed by two parts (22, 24) connected together in a sealed manner by the interaction (30, 32) of their conjugate respective end shapes producing an interface going from the inside of the enclosure as far as the outside over a chosen length, and in that at least one (22) of the two parts is made of a non-magnetic mouldable material, the said part being produced by partial overmoulding of the said core (16) in the zone forming the penetrations (26, 28).

4. Converter according to Claim 1 or 2, characterized in that the wall of the said enclosure (40) is formed by two parts (43, 44) connected together in a sealed manner by the interaction of their conjugate respective end shapes producing an interface going from the inside of the enclosure as far as the outside over a chosen length, and in that the branches (50d, 50e) of the core, extending through the said openings (46, 48), include shoulders (58, 60) coming to rest against the internal face of the wall (42) of the enclosure and are rigidly attached to this wall by an adhesive resin (62, 64), the air gap of the core being formed by two end elements (50b, 50c) fixed to the end of the penetrating branches (50d, 50e) of the core.

## Patentansprüche

1. Elektropneumatischer Wandler, umfassend ein Düse (4), die mit einem zu steuernden Fluidkreis (2) fest verbunden ist, einen Hebel (8), der schwenkbar um eine Achse montiert ist und von dem ein Ende gegenüber der Düse angeordnet ist, einen Elektromagnet, der durch eine Induktionsspule (14, 54) gesteuert ist und einen Kern (16, 50) umfaßt, der mit zwei Schenkein (16a, 16b, 50d, 50e, 50b, 50c) versehen ist, die einen Polspalt (18, 56) zur Erzeugung eines Magnetfeldes abgrenzen, das auf den Hebel einwirkt, um sein Ende gegenüber der Düse bewegen zu lassen, wobei der Druck des Fluids von der Stellung des Endes des Hebels bezüglich der Düse abhängt, dadurch gekennzeichnet, daß er eine Explosionsschutzkammer (20, 40) umfaßt, deren Wand Öffnungen (26, 28; 46, 48), die von diesen Schenkein durchquert sind, und Explosionsschutzdichtungen (26, 28, 58, 60, 62, 64) in Höhe dieser Durchführungen besitzt,
daß die Induktionsspule (14; 54) im Inneren der Kammer gelegen ist, während der Polspalt (18; 56) außerhalb der Kammer (20, 40) gelegen ist,
und daß der Hebel (8) und seine Drehachse (10) vollständig außerhalb der Kammer gelegen sind, wobei das Ende des Hebels, das dem der Düse gegenüberliegenden Ende entgegengesetzt ist, in Nähe des Polspalts (18, 56) angeordnet und der Einwirkung des Magnetfelds ausgesetzt ist.

2. Wandler nach Anspruch 1, dadurch gekennzeichnet, daß er eine Palette (6) umfaßt, die an dem Ende des Hebels (8) montiert ist, das gegenüber der Düse (4) angeordnet ist, während das Ende dieses Hebels, das dem der Düse gegenüberliegenden Ende entgegengesetzt ist, mit einem ferromagnetischen Teil (12) fest verbunden ist, das der Einwirkung des Magnetfeldes ausgesetzt ist.

3. Wandler nach Anspruch 1 oder 2, dadurch gekennzeichnet, daß die Wand der Kammer (20) aus zwei Teilen (22, 24) geformt ist, die miteinander durch Zusammenwirken (30, 32) ihrer jeweiligen gepaarten Endformen dicht verbunden sind, die eine Schnittstelle schaffen, die vom Inneren der Kammer bis zum Äußeren über eine gewählte Länge verläuft, und daß wenigstens einer der beiden Teile (22) aus einem gießbaren und nicht magnetischen Material hergestellt ist, wobei dieser Teil durch partielles Umgießen dieses Kerns (16) in der die Durchführungen (26, 28) bildenden Zone hergestellt ist.

4. Wandler nach Anspruch 1 oder 2, dadurch gekennzeichnet, daß die Wand dieser Kammer (40) aus zwei Teilen (43, 44) geformt ist, die miteinander durch Zusammenwirken ihrer jeweiligen paarweisen Endformen dicht verbunden sind, die eine Schnittstelle schaffen, die vom Inneren der Kammer bis zum Äußeren über eine gewählte Länge verläuft, und daß die Schenkel (50d, 50e) des Kerns, die sich durch diese Öffnungen (46, 48) erstrecken, Schultern (58, 60) umfassen, die an der Innenseite der Wand (42) der Kammer in Anschlag kommen und mit dieser Wand durch ein klebendes Harz (62, 64) fest verbunden sind, wobei der Polspalt des Kerns durch zwei Endelemente (50b, 50c) geformt ist, die am Ende der durchquerenden Schenkel (50d, 50e) des Kerns befestigt sind.
